# EUROPEAN PATENT SPECIFICATION

(11) **EP 2 852 540 B1**
(45) Date of publication and mention of the grant of the patent: **06.07.2016**
(21) Application number: 13714452.3
(22) Date of filing: 19.03.2013
(51) Int. Cl.: F25B 1/00, F25D 3/08, F25D 11/00, B65D 88/74, B65D 90/02, B60P 3/20

(54) **CLIMATE CONTROLLED CARGO CONTAINER**
KLIMATISIERTER FRACHTBEHÄLTER
CONTENEUR DE TRANSPORT CLIMATISÉ

(30) Priority: 23.05.2012 US 201261650592 P
(43) Date of publication of application: 01.04.2015
(73) Proprietor: Carrier Corporation, Farmington, CT 06034 (US)
(72) Inventor: MA, Zidu, Farmington, Connecticut 06034 (US)
(74) Representative: Klunker . Schmitt-Nilson . Hirsch
(86) International application number: PCT/US2013/032931
(87) International publication number: WO 2013/176776

(56) References cited:
- GB-A- 1 198 354
- US-A- 5 450 977
- US-A- 5 855 174
- US-A1- 2009 038 980

## Description

### BACKGROUND OF THE INVENTION

The subject matter disclosed herein relates to climate controlled cargo containers. More specifically, the subject matter disclosed herein relates to a wall panel(s) used in a climate controlled cargo container.

A typical climate controlled cargo container, such as those utilized to transport cargo via sea, rail or road, is a container modified to include a refrigeration unit. The refrigeration unit includes a compressor, condenser, expansion valve and evaporator coil, located at an end of the container. A volume of refrigerant circulates throughout the refrigeration unit, and one or more evaporator fans of the refrigeration unit blows a flow of air across the evaporator coil cooling the air and forcing it into the container.

US 5 450 977 A discloses a refrigerated shipping container having a rigid support structure surrounding the walls thereof. The floor, roof, endwall, door assemblies and sidewalls are made from a light, non-metal, highly insulative material. These components generally comprise two relatively thin sheets of the insulative material separated by support channels. The cavities between the sheets are filled with foam insulation. Reinforcing rods may also be utilized to pre-load the structure before packing the cargo in the container. The walls, floor, door assemblies, and roof are assembled on the metal structure such that no support surface of the structure extends from inside the container to the outside.

US 5 855 174 A discloses an insulated composite railway boxcar having a composite box structure mounted on a railway car underframe is provided. The composite box structure includes side walls, end walls and a floor molded as an integral unit with fiber reinforced plastic interior and exterior surfaces. The composite box structure includes a first fiber reinforced composite unit and a second fiber reinforced composite unit. The first fiber reinforce composite unit provides the end walls, side walls and floor for the railway boxcar. The second fiber reinforce unit may be permanently attached to the side walls and end walls to provide a roof for the boxcar. The railway car underframe has a center sill, side sills and end sills with a generally rectangular configurations and coplanar surfaces for adhesively bonding the composite box structure with the railway car underframe. Mechanical fasteners are also provided to couple the composite box structure with the railway car underframe.

US 2009/038980 A1 descrives an insulated tank assembly with insulation stop and a method of constructing such an assembly. The assembly includes an inner tank with an outer shell located in spaced relation to and surrounding the inner tank, creating at least one annular clearance space between the tank and the shell. The space is closed by a sealing device that includes a circumferential sealing strip having an unstretched strip length that is less than either the continuous outer top edge length or the continuous outer bottom edge length, or both, of the strip. Such length relationships make the sealing strip both resilient and resistant to rolling during construction of the assembly. The sealing strip may be a fibrous strip. The tank assembly may be insulated by placing insulating material within the at least one annular clearance space, which may be a foamable insulation material, foamed in place within the annular clearance space.

GB 1 198 354 A discloses a refrigeration system for use in controlling temperature in the shipping of perishable commodities comprising heat exchange means, means for maintaining said heat exchange means at a refrigerating temperature, a heat transfer circulating system configurated substantially to surround perishable commodities for controlling the temperature of said commodities, means coupling said heat exchange means in gravity-feeding circulation relationship to said heat transfer circulating system, said coupling means comprising a heat transfer fluid feed line and a heat transfer fluid return line, said heat transfer circulating system being evacuated and a vaporizable heat transfer fluid hermetically sealed in said circulating system.

As the cargo container is climate controlled, it is desirable to provide the cargo container with insulated walls, ceiling and/or floor to retain thermal energy in the container. Improvements in insulated wall panels for cargo containers would be well received in the art.

### BRIEF DESCRIPTION OF THE INVENTION

The invention is solved according to claim 1.

The advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a cutaway view of an embodiment of a refrigerated cargo container;
FIG. 2 is a cross-sectional view of an insulated panel in an embodiment;
FIG. 3 is a cross-sectional view of an insulated panel in an alternate embodiment which is not part of the invention;
FIG. 4 is a cross-sectional view of an insulated panel in an alternate embodiment;
FIG. 5 is a cross-sectional view of an insulated panel in an alternate embodiment which is not part of the invention;
FIG. 6 depicts an exemplary system for evacuating an insulated panel;
FIG. 7 is a cross-sectional view of an insulated panel in an alternate embodiment; and
FIG. 8 is a cross-sectional view of an insulated panel in an alternate embodiment which is not part of the invention.

### DETAILED DESCRIPTION OF THE INVENTION

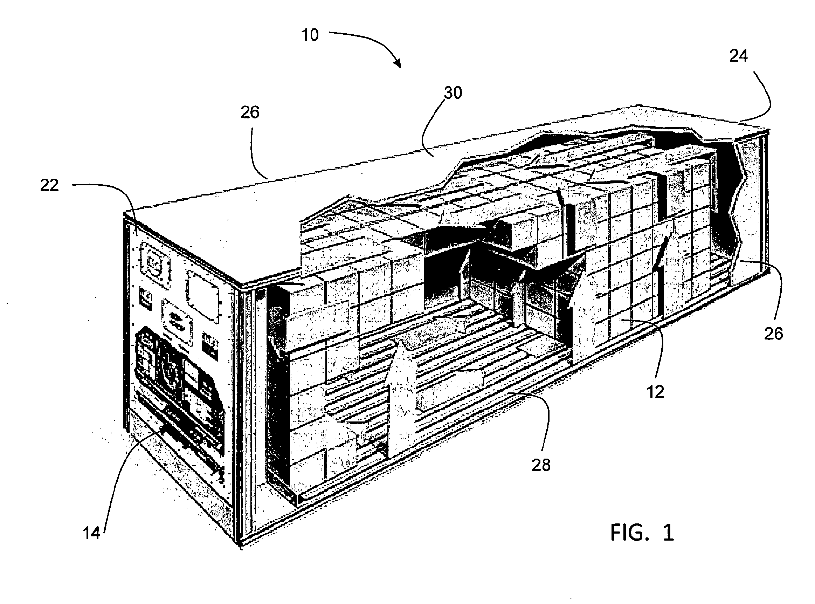

Shown in FIG. 1 is an embodiment of a climate controlled cargo container 10. In the embodiment of FIG. 1, the cargo container 10 is configured to maintain a cargo 12 located inside the cargo container 10 at a selected temperature through the use of a refrigeration unit 14. Cargo container 10 is refrigerated, but may be heated by using a heating unit instead of refrigeration unit 14. The cargo container 10 is mobile and is utilized to transport cargo 12 via, for example, a truck, a train or a ship. The refrigeration unit 14 includes a compressor, a condenser, an expansion valve and an evaporator, located at, for example, a first end 22 of the container 10. The container 10 further includes a second end 24 located opposite the first end 22, and two sidewalls 26, a floor 28 and a roof 30 located between the first end 22 and the second end 24. Second end 24 typically includes doors for accessing the interior of container 10. One or more of the sidewalls 26, floor 28, roof 30, first end 22 and second end 24 of container 10 may be made using an insulated panel as described herein.

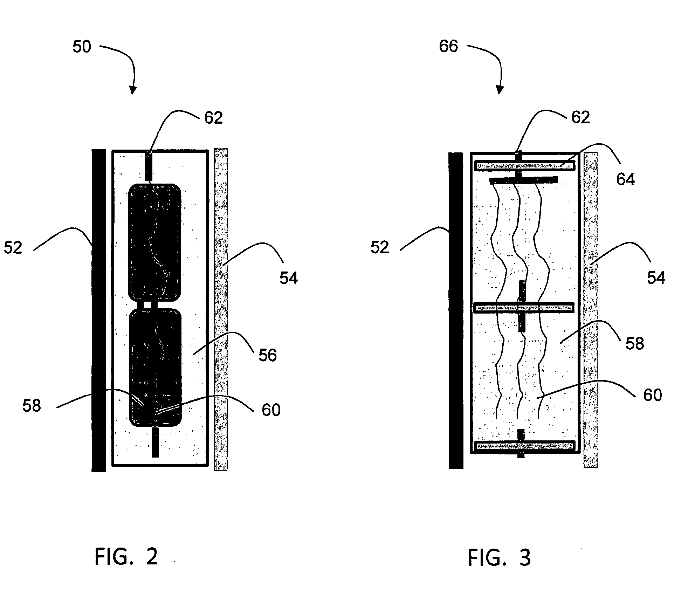

FIG. 2 is a cross-sectional view of an insulated panel 50 in an embodiment. Panel 50 includes an outer layer 52 which provides an exterior surface of container 10. In exemplary embodiments, outer layer 52 is sheet metal, but outer layer 52 may be formed from other materials. An inner layer 54 provides an interior surface of container 10. In exemplary embodiments, inner layer 54 is sheet metal, but inner layer 54 may be formed from other materials. Positioned within, and adjacent to, outer layer 52 and inner layer 54 is a first foam 56. In the embodiment of FIG. 2, first foam 56 is a closed cell foam. Foam 56 may be polyurethane, but it is understood that other types of closed cell foams may be used.

Positioned interior to the first foam 56 is a second foam 58. Second foam 58 is an open cell foam, and may be polyurethane, or another type of open cell foam. Embedded within the second foam 58 are fiber tubes 60. Fiber tubes 60 may have a variety dimensions. Fiber tubes 60 have porous walls and gas flows freely through the pores on the membrane walls. This allows a fast evacuation of the gases trapped in the cells of foam 58 adjacent to the fiber tube outer walls. The porous wall of the fiber tubes 60 make fluid connections to the cells of foam. The open cells of foam 58 and tubes 60 form channels that have much higher resistance to heat flow.

In an exemplary embodiment, the fiber tubes 60 may be carbon fiber tubes. The tube walls may have a porosity of about 30% to about 80%. The tube walls may have a pore size of about 0.01 microns to about 0.4 microns. The tube wall thickness may be from about 5 microns to about 150 microns. The tube inner diameter may be from about 5 microns to about 100 microns.

The fiber tubes 60 provide evacuation channels within the second foam 58 by interconnecting open cells within the second foam 58. The channels in second foam 58 improve the evacuation of the blowing agent for the second foam 58 under vacuum to improve R value.

Insulated panel 50 may be manufactured by forming and curing sections of first foam 56 and then assembling the first foam sections between the outer layer 52 and inner layer 54. First foam 56 may be encased in an air-tight barrier (e.g., plastic film) to preserve a vacuum in the panel. The second foam 58 is then blown into the cavity interior the first foam 56 sections through one or more ports 62. Fiber tubes 60 may be positioned in the cavity prior to blowing the second foam 58 or the fiber tubes 60 may be intermixed with the second foam 58 during the blowing procedure. Several areas of second foam 58 may be blown at the same time through a plurality of ports 62 coupled to a header.

Once the second foam 58 has cured, a vacuum is applied to the second foam 58 to evacuate the blowing agent and form a vacuum in the open cells of second foam 58 and in the channels formed by fiber tubes 60. The vacuum may be applied to the port 62 used to blow in second foam 58. The port(s) 62 may be sealed to preserve the vacuum in second foam 58. Alternatively, a low-cost vacuum system may continuously evacuate second foam 58 through ports 62. The vacuum may also be conditioned to run only at certain times (e.g., only when the compressor is running).

FIG. 3 is a cross-sectional view of an insulated panel 66 in an alternate embodiment which is not part of the invention. The embodiment of FIG. 3 is similar to that of FIG. 2, with the first foam 56 eliminated. The second foam 58 is blown between the outer layer 52 and inner layer 54, with fiber tubes 60 embedded within the second foam 58. Structural members 64 (e.g., metal brackets) are secured to the interior of outer layer 52 and inner layer 54 to provide enhanced structural stability to panel 66.

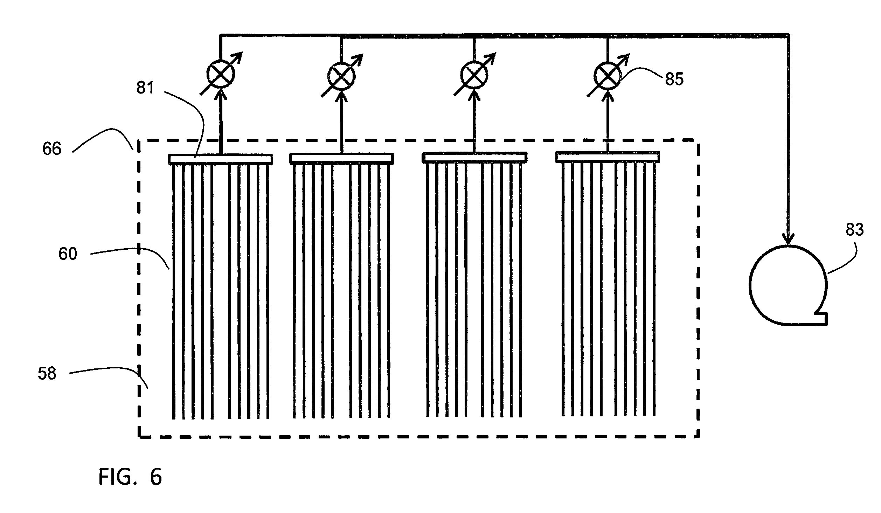

Panel 66 is formed in a manner similar to panel 50. Outer layer 52 and inner layer 54 are joined by structural members 64 at one or more locations and the second foam 58 is blown into the cavity between outer layer 52 and inner layer 54. The cavity may be lined with an air-tight barrier (e.g., plastic film) to preserve a vacuum in the panel. Fiber tubes 60 may be positioned in the cavity prior to blowing the second foam 58 or the fiber tubes may be intermixed with the second foam 58 during the blowing procedure. Several areas of second foam 58 may be blown at the same time through a plurality of ports 62 coupled to a manifold, described with reference to Figure 6. A vacuum is then applied to second foam 58 as described above with reference to FIG. 2.

Panels 50 and 66 provide an improved R-value while still providing structure for container 10. Either of panels 50 and 66 may be used for walls, ceiling, floor, first end or second end of container 10. At second end 24, either of panels 50 and 66 would be incorporated into doors providing access to the interior of container 10.

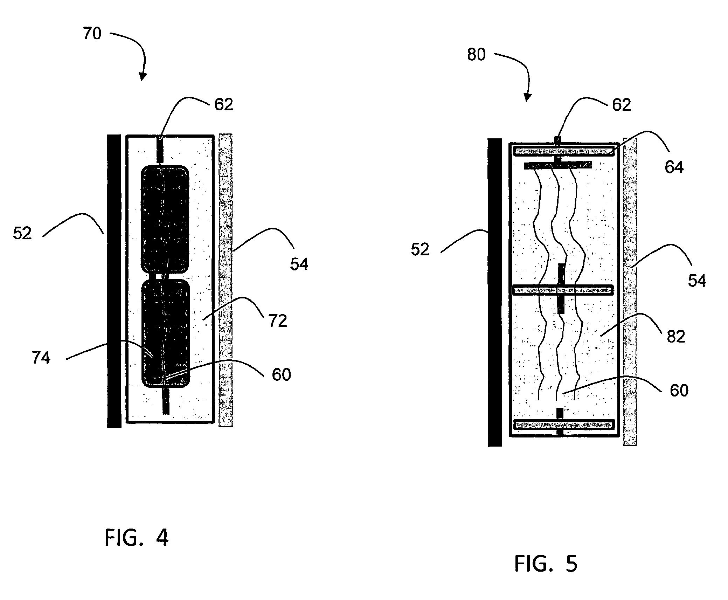

FIG. 4 is a cross-sectional view of an insulated panel 70 in an alternate embodiment. Panel 70 includes an outer layer 52 which provides an exterior surface of container 10. In exemplary embodiments, outer layer 52 is sheet metal, but outer layer 52 may be formed from other materials. An inner layer 54 provides an interior surface of container 10. In exemplary embodiments, inner layer 54 is sheet metal, but inner layer 54 may be formed from other materials. Positioned within, and adjacent to, outer layer 52 and inner layer 54 is a first foam 72. In the embodiment of FIG. 4, first foam 72 is a closed cell foam. Foam 72 may be polyurethane, but it is understood that other types of closed cell foams may be used. Foam 72 may include high R-value aerogels incorporated (e.g., in the catalyst part) during the two part mixing of foam 72 or pre-formulated into one of the two reactant parts of foam 72. Aerogels in foam 72 may be silica, carbon, alumina, or other known aerogels.

Positioned interior to the first foam 72 is second foam 74. Second foam 74 is an open cell foam, and may be polyurethane, or other type of open cell foam. Embedded within the second foam 74 and/or first foam 72 are fiber tubes 60. Fiber tubes 60 may have a variety dimensions. In an exemplary embodiment, the fiber tubes 60 may be carbon fiber tubes, having an inner diameter of 60 microns and an outer diameter of 100 microns, and varying lengths. The fiber tubes 60 provide evacuation channels within the second foam 74 by interconnecting open cells within the second foam 58. The channels in second foam 74 improve the evacuation of the blowing agent for the second foam 74. Foam 74 may also include high R-value aerogels incorporated during the two part mixing of foam 74 or pre-formulated into one of the two reactant parts of foam 74. Aerogels in foam 74 may be silica, carbon, alumina, or other known aerogels.

Insulated panel 70 may be manufactured by forming and curing the first foam 72 sections (with or without aerogels) and then assembling the first foam sections 72 between the outer layer 52 and inner layer 54. First foam 72 may be encased in an air-tight barrier (e.g., plastic film) to preserve a vacuum in the panel. The second foam 74 (with or without aerogels) is then blown into the cavity interior the first foam 72 sections through one or more ports 62. Fiber tubes 60 may be positioned in the cavity prior to blowing the second foam 74 or the fiber tubes may be intermixed with the second foam 74 during the blowing procedure. Several areas of second foam 74 may be blown at the same time through a plurality of ports 62 coupled to a header.

Once the second foam 74 has cured, a vacuum is applied to the second foam 74 to evacuate the blowing agent and form a vacuum in the open cells of second foam 74 and in the channels formed by fiber tubes 60. The vacuum may be applied to the ports 62 used to blow in second foam 74. Aerogels in second foam 74 help to define additional channels due to the open cell nature of aerogels. The panel 70 may be sealed to preserve the vacuum in second foam 74 by sealing ports 62. Alternatively, a low-cost vacuum system may continuously evacuate second foam 74 through the ports 62. The vacuum may also be conditioned to run only at certain times, (e.g., only when the compressor is running).

FIG. 5 is a cross-sectional view of an insulated panel 80 in an alternate embodiment which is not part of the invention. The embodiment of FIG. 5 is similar to that of FIG. 4, with the first foam 72 eliminated. The second foam 82 is blown between the outer layer 52 and inner layer 54, with fiber tubes 60 embedded within the second foam 82. Foam 82 may include high R-value aerogels incorporated during the two part mixing of foam 82 or pre-formulated into one of the two reactant parts of foam 82. Aerogels in foam 82 may be silica, carbon, alumina, or other known aerogels. Structural members 64 (e.g., metal brackets) are secured to the interior of outer layer 52 and inner layer 54 to provide enhanced structural stability to panel.

Outer layer 52 and inner layer 54 are joined by structural members 64 at one more locations and the second foam 82 (with aerogels) is blown into the cavity between outer layer 52 and inner layer 54. The cavity may be lined with an air-tight barrier (e.g., plastic film) to preserve a vacuum in the panel. Fiber tubes 60 may be positioned in the cavity prior to blowing the second foam 82 or the fiber tubes may be intermixed with the second foam 82 during the blowing procedure. Several areas of second foam 82 may be blown at the same time through a plurality of ports 62 coupled to a manifold, described with reference to Figure 6. A vacuum is then applied to second foam 82 as described above with reference to FIG. 2.

Panels 70 and 80 provide an improved R-value while still providing structure for container 10. Panels 70 and 80 may be used for walls, ceiling, floor, first end or second end of container 10. At second end 24, panels 70 and 80 would be incorporated into doors providing access to the interior of container 10.

FIG. 6 depicts an exemplary system for evacuating an insulated panel such as those shown in FIGs. 2-5. FIG. 6 depicts a panel, such as panel 66, with fiber tubes 60 embedded in the open cell foam 58 as described above. Fiber tubes 60 are connected to one or more manifolds 81 that are in fluid communication with vacuum pump 83 through valves 85. Once open cell foam 58 has cured, vacuum pump 83 is activated to draw gas from the open cell foam 58. Once a vacuum is established in the open cell foam 58, valves 85 may be closed. Alternatively, the vacuum can run continuously or in synchronization with other system components (e.g., compressor)

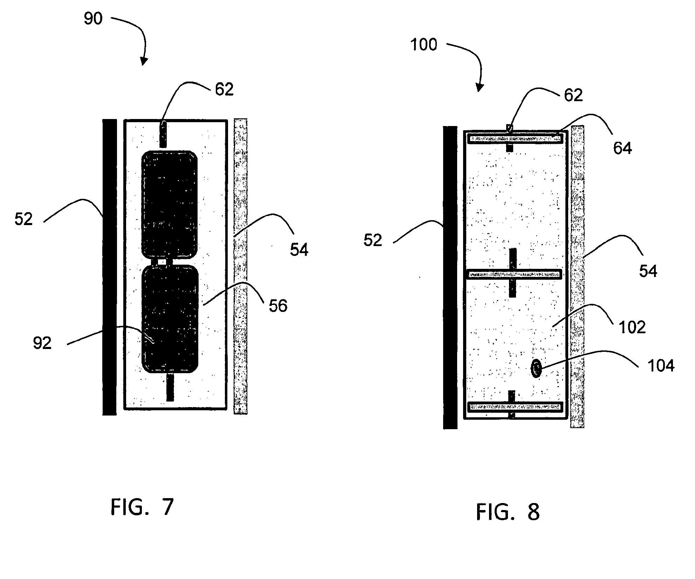

FIG. 7 is a cross-sectional view of an insulated panel 90 in an embodiment. Panel 90 includes an outer layer 52 which provides an exterior surface of container 10. In exemplary embodiments, outer layer 52 is sheet metal, but outer layer 52 may be formed from other materials. An inner layer 54 provides an interior surface of container 10. In exemplary embodiments, inner layer 54 is sheet metal, but inner layer 54 may be formed from other materials. Positioned within, and adjacent to, outer layer 52 and inner layer 54 is a first foam 56. In the embodiment of FIG. 7, first foam 56 is a closed cell foam. Foam 56 may be polyurethane, but it is understood that other types of closed cell foams may be used.

Positioned interior to sections of the first foam 56 is a phase change material panel 92. Phase change material panel 92 stores thermal energy to aid in maintaining cargo 12 at a desired temperature. Phase change material panel 92 may be made from a material having a melting point defined relative to (e.g., approximately equal to or above) the desired shipping temperature of cargo 12. As the temperature within container 10 increases, the phase change material 92 will reach its melting point, and absorb heat in transitioning from a solid state to a liquid state. Panels 90 may be pre-cooled to place phase change material panel 92 in a solid state prior to shipping container 10. This reduces the load on the compressor of refrigeration unit 14 and provides an ability to absorb heat.

Insulated panel 90 may be manufactured by forming and curing the first foam 56 sections, placing encapsulated phase change material panel 92 in between the first foam 56 sections and then mounting the outer layer 52 and inner layer 54 to the first foam 56. Alternatively, insulated panel 90 may be manufactured by forming and curing the first foam 56 sections and then assembling the first foam sections 56 between the outer layer 52 and inner layer 54. The phase change material 92 is then pumped into the cavity interior the first foam 56 sections through one or more ports 62. Ports 62 may then be sealed to hold the phase change material panel 92 within panel 90.

FIG. 8 is a cross-sectional view of an insulated panel 100 in an alternate embodiment, which is not part of the claimed invention. A second foam 102 is positioned between the outer layer 52 and inner layer 54. Second foam 102 is an open cell foam (e.g., polyurethane) that includes phase change material particles 104 (e.g., about 20 micron size). Structural members 64 (e.g., metal brackets) are secured to the interior of outer layer 52 and inner layer 54 to provide enhanced structural stability to panel 100.

Phase change material particles 104 store thermal energy to aid in maintaining cargo 12 at a desired temperature. Phase change material particles 104 may be made from a material having a melting point defined relative to (e.g., approximately equal to or above) the desired shipping temperature of cargo 12. As the temperature within container 10 increases, the phase change material particles 104 will reach a melting point, and absorb heat in transitioning from a solid state to a liquid state. Panels 100 may be pre-cooled to place phase change material particles 104 in a solid state prior to shipping container 10. This reduces the load on the compressor of refrigeration unit 14.

Outer layer 52 and inner layer 54 are joined by structural members 64 at one more locations and the second foam 102 is blown into the cavity between outer layer 52 and inner layer 54. Several areas of second foam 102 may be blown at the same time through a plurality of ports 62 coupled to a header.

Panels 90 and 100 provide an improved R-value while still providing structure for container 10. Increased overall insulation performance (higher effective R value) is due to the combined effect of the capacity of thermal energy storage provided by the phase change materials and a pre-defined phase change temperature. Further, peak heat flux of panels 90 and 100 is reduced due to the energy storage of the phase change material. Panels 90 and 100 may be used for walls, ceiling, floor, first end or second end of container 10. At second end 24, panels 90 and 100 would be incorporated into doors providing access to the interior of container 10.

## Claims

1. A climate controlled cargo container (10) comprising:
at least one panel (50; 70) including:
an outer layer (52);
an inner layer (54);
a foam (58; 74) positioned in between the inner layer (54) and the outer layer (52); and
a plurality of fiber tubes (60) embedded within the foam (58; 74);
**characterized in that**
the foam (58; 74) is an open cell foam; and wherein the climate controlled cargo container (10) further comprises
another foam (56; 72), being a closed cell foam (56; 72) which is positioned between the outer layer (52) and the open cell foam (56; 72) and wherein the closed cell foam (56; 72) is positioned between the inner layer (54) and the open cell foam (56; 72).

2. The climate controlled cargo container (10) of claim 1 wherein:
the fiber tubes (60) are hollow fiber membrane tubes.

3. The climate controlled cargo container (10) of claim 1 being designed in that
a vacuum is applied to the open cell foam (58; 74).

4. The climate controlled cargo container (10) of claim 1 being designed in that
the fiber tubes (60) are embedded in the open cell foam (58; 74) upon blowing the open cell foam (58; 74) between the inner layer (54) and the outer layer (52).

5. The climate controlled cargo container (10) of claim 1 being designed in that
the fiber tubes (60) are positioned between the inner layer (54) and the outer layer (52) prior to blowing the open cell foam (58; 74) between the inner layer (54) and the outer layer (52).

6. The climate controlled cargo container (10) of claim 1 wherein:
the open cell foam (58; 74) includes an aerogel.

7. The climate controlled cargo container (10) of claim 3 wherein:
the closed cell foam (56; 72) includes an aerogel.

8. The climate controlled cargo container (10) of claim 1 further comprising:
a manifold (81) coupled to the fiber tubes (60), wherein the manifold is for coupling with a vacuum pump (83).

## Patentansprüche

1. Klimatisierter Frachtbehälter (10), umfassend:
wenigstens eine Verkleidung (50; 70), beinhaltend:
eine Außenschicht (52);
eine Innenschicht (54);
einen Schaum (58; 74), der zwischen der Innenschicht (54) und der Außenschicht (52) angeordnet ist; und
eine Mehrzahl von Faserröhren (60), die in dem Schaum (58; 74) eingebettet sind;
**dadurch gekennzeichnet, dass**
der Schaum (58; 74) ein Schaum mit offenen Zellen ist; und wobei der klimatisierte Frachtbehälter (10) ferner Folgendes umfasst
einen weiteren Schaum (56; 72), der ein Schaum mit geschlossenen Zellen ist (56; 72) und der zwischen der Außenschicht (52) und dem Schaum mit offenen Zellen (56; 72) angeordnet ist, und wobei der Schaum mit geschlossenen Zellen (56; 72) zwischen der Innenschicht (54) und dem Schaum mit offenen Zellen (56; 72) angeordnet ist.

2. Klimatisierter Frachtbehälter (10) nach Anspruch 1, wobei:
die Faserröhren (60) Hohlfasermembranröhren sind.

3. Klimatisierter Frachtbehälter (10) nach Anspruch 1, derart gestaltet, dass
ein Vakuum an den Schaum mit offenen Zellen (58; 74) angelegt wird.

4. Klimatisierter Frachtbehälter (10) nach Anspruch 1, derart gestaltet, dass
die Faserröhren (60) in dem Schaum mit offenen Zellen (58; 74) eingebettet werden, wenn der Schaum mit offenen Zellen (58; 74) zwischen die Innenschicht (54) und die Außenschicht (52) geblasen wird.

5. Klimatisierter Frachtbehälter (10) nach Anspruch 1, derart gestaltet, dass
die Faserröhren (60) zwischen der Innenschicht (54) und der Außenschicht (52) angeordnet werden, bevor der Schaum mit offenen Zellen (58; 74) zwischen die Innenschicht (54) und die Außenschicht (52) geblasen wird.

6. Klimatisierter Frachtbehälter (10) nach Anspruch 1, wobei:
der Schaum mit offenen Zellen (58; 74) ein Aerogel beinhaltet.

7. Klimatisierter Frachtbehälter (10) nach Anspruch 3, wobei:
der Schaum mit geschlossenen Zellen (56; 72) ein Aerogel beinhaltet.

8. Klimatisierter Frachtbehälter (10) nach Anspruch 1, ferner umfassend:
einen Verteiler (81), der an die Faserröhren (60) gekoppelt ist, wobei der Verteiler zum Koppeln an eine Vakuumpumpe (83) dient.

## Revendications

1. Conteneur de transport climatisé (10) comprenant :
au moins un panneau (50 ; 70) comprenant :
une couche extérieure (52) ;
une couche intérieure (54) ;
une mousse (58 ; 74) positionnée entre la couche intérieure (54) et la couche extérieure (52) ; et
une pluralité de tubes à fibre (60) enfoncés dans la mousse (58 ; 74) ;
**caractérisé en ce que**
la mousse (58 ; 74) est une mousse à cellules ouvertes ; et dans lequel le conteneur de transport climatisé (10) comprend en outre
une autre mousse (56 ; 72), étant une mousse à cellules fermées (56 ; 72) qui est positionnée entre la couche extérieure (52) et la mousse à cellules ouvertes (56 ; 72) et dans lequel la mousse à cellules fermées (56 ; 72) est positionnée entre la couche intérieure (54) et la mousse à cellules ouvertes (56 ; 72).

2. Conteneur de transport climatisé (10) selon la revendication 1 dans lequel :
les tubes à fibre (60) sont des tubes à membrane fibreuse creuse.

3. Conteneur de transport climatisé (10) selon la revendication 1 étant conçu en ce que un vide est appliqué à la mousse à cellules ouvertes (58 ; 74).

4. Conteneur de transport climatisé (10) selon la revendication 1 étant conçu en ce que
les tubes à fibre (60) sont enfoncés dans la mousse à cellules ouvertes (58 ; 74) en soufflant la mousse à cellules ouvertes (58 ; 74) entre la couche intérieure (54) et la couche extérieure (52).

5. Conteneur de transport climatisé (10) selon la revendication 1 étant conçu en ce que
les tubes à fibre (60) sont positionnés entre la couche intérieure (54) et la couche extérieure (52) avant de souffler la mousse à cellules ouvertes (58 ; 74) entre la couche intérieure (54) et la couche extérieure (52).

6. Conteneur de transport climatisé (10) selon la revendication 1 dans lequel :
la mousse à cellules ouvertes (58 ; 74) comprend un aérogel.

7. Conteneur de transport climatisé (10) selon la revendication 3 dans lequel :
la mousse à cellules fermées (56 ; 72) comprend un aérogel.

8. Conteneur de transport climatisé (10) selon la revendication 1 comprenant en outre :
un collecteur (81) couplé aux tubes à fibre (60), dans lequel le collecteur doit être couplé à une pompe à vide (83).
